(19) **Europäisches Patentamt**

**European Patent Office**

**Office européen des brevets**

(11) **EP 1 448 918 B1**

(12) **EUROPEAN PATENT SPECIFICATION**

(45) Date of publication and mention
of the grant of the patent:
**06.12.2006 Bulletin 2006/49**

(51) Int Cl.:
$F16J\ 9/00$ (2006.01)    $F16J\ 9/22$ (2006.01)
$F02F\ 3/00$ (2006.01)

(21) Application number: **02764411.1**

(22) Date of filing: **13.08.2002**

(86) International application number:
**PCT/BR2002/000115**

(87) International publication number:
**WO 2003/016757 (27.02.2003 Gazette 2003/09)**

(54) **PISTON FOR AN INTERNAL COMBUSTION ENGINE**

KOLBEN FÜR VERBRENNUNGSMOTOR

PISTON POUR MOTEUR A COMBUSTION INTERNE

(84) Designated Contracting States:
**DE ES FR GB IT**

(30) Priority: **17.08.2001 BR 0104909**

(43) Date of publication of application:
**25.08.2004 Bulletin 2004/35**

(73) Proprietor: **Mahle Metal Leve S.A.**
**CEP-04746-901 Sao Paulo, SP (BR)**

(72) Inventors:
• **TOMANIK, Antonio Eduardo Meirelles**
**Campo Belo, 04618- 003 Sao Paulo - SP (BR)**
• **ZABEU, Clayton, Barcelos**
**04149-080 Sao Paulo - SP (BR)**
• **ALMEIDA, Germano, Moreira**
**04302-000 Sao Paulo - SP (BR)**
• **LOPES, José Roberto**
**04625-900 Sao Paulo - SP (BR)**

(74) Representative: **Kehl, Günther**
**Kehl & Ettmayr Patentanwälte,**
**Friedrich-Herschel-Strasse 9**
**81679 München (DE)**

(56) References cited:
FR-A- 985 648          FR-A- 2 087 266
GB-A- 2 002 874        US-A- 1 862 983
US-A- 2 292 042        US-A- 2 522 764

**Description**

Field of the Invention

The present invention refers to a constructive solution for a piston of the type used in an internal combustion engine and, more particularly, to a constructive solution for the groove of such piston.

Background of the Invention

The piston ring of internal combustion engines presents, due to assembly or operational clearances, a relative movement in relation to the groove. Such relative movement, associated to the load imparted to the ring, mainly by the combustion gases, causes wear to the lateral faces of both the ring and the groove. In the groove located closer to the piston top, or first groove, where the loads are more severe, the ring is made of cast iron or steel, while the piston is of aluminum alloy, especially for Otto cycle engines. As the material of the piston is less wear resistant than that of the ring, more concern about wear is concentrated on the piston groove.

Under normal conditions, the wear of the first groove is of the order of few micrometers throughout the useful life of the engine, not impairing the engine's performance. In engines having severe operational conditions, in which the wear would be excessive, it is commonly used the solution of hard anodizing the region of the first groove, which solution creates a wear resistant hard flank, leading to acceptable wear values. However, such solution has the disadvantage of increasing the piston cost in about 20%.

In recent years, the increase in the engines' specific power has been associated to the use of rings made of nitrided steel, which, although bringing advantages as to the consumption of lubricant oil and the sealing of combustion gases, on the other hand can increase the groove wear, since the rings are harder than the cast iron. Thus, it has been more common to occur problems of excessive wear, consequently impairing the engine's performance, at least during the development phase of the engine. This wear problem has been solved by using nobler aluminum alloys and/or by hard anodizing the piston. However, both solutions increase the cost of the product or lead to the use of cast iron rings, avoiding the use of the significant advantages of employing rings of nitrided steel.

As mentioned above, it is possible to increase the wear resistance of the groove by using, in the piston, nobler and more wear resistant aluminum alloys, or by hard anodizing. Since the wear resistance of the aluminum is considerably reduced with temperature increase, some artifices to reduce the temperature may be used, especially in the region of the first groove. It is known to use spraying a lubricant through injecting nozzles located in the engine block in the internal region of the piston, in which case the lubricant oil functions as a refrigerant. It is also possible to locate the first groove more distant from the piston top, which reduces its temperature, but brings disadvantages as to the emission of pollutants by the engine.

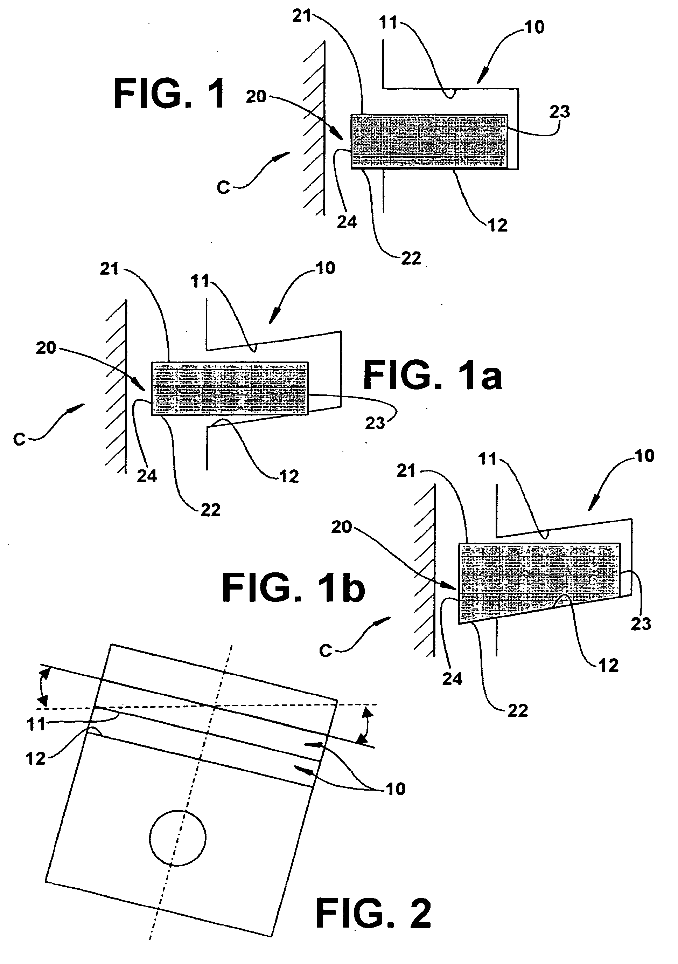

Ideally, the lateral faces of both the ring and the groove of the piston should be parallel, so that the contact and the resulting pressures can be distributed, which minimizes the wear (figure 1). However, due to design characteristics, thermomechanical deformations of the piston, or to the relative angular movement between the ring and the piston, such contact occurs, in determined operational conditions of the piston, in a contact region between the ring and the interior of the groove (figure 1A).

Due to the differentiated thermal expansion of the piston, higher at the top where the temperatures are higher, and lower towards its lower portion, which is commonly denominated piston skirt, the first groove tends to change its nominal design inclination, in a cold condition, to a higher inclination downwardly (figure 1A). Typical values of this inclination change are of the order of 10-15 minutes, in the anticlockwise direction, i.e., the groove, under operation, tends to change its nominal inclination to a higher inclination downwardly.

It is known to use pistons with grooves that are upwardly inclined in their nominal values. This is usually made to assure the ring will not contact the cylinder wall with its upper portion, which would be undesirable as to the scraping of lubricant oil by the ring. In addition to the thermal deformation of the groove, the piston moves angularly in relation to the pin, so that the resulting angle depends on the position of the pin along the height of the piston. This movement is shown in figure 2, in which the maximum displacement of the piston for each side of a plane that is orthogonal to the piston axis is illustrated. The maximum inclination of the piston as a whole is of about 10 minutes, and it can vary at each instant of the piston stroke. The effect of such inclination in groove wear is quite inferior to that resulting from groove inclination, which lasts throughout the piston stroke.

Due to the transient conditions found in the internal combustion engine, in which at each 1 degree interval of the crankshaft (which, for example, at 3,000 rpm is equivalent to about 0.06 millisecond), the ring/groove relative position, as well as the ring load on the groove, vary during the combustion stroke, as well as in each operational condition of the engine.

In a known prior art solution, the lateral face of the ring is provided with the same angle of inclination as the groove under operation (figure 1B). In this construction, the ring has its lateral face with the same inclination as that of the groove under operation.

Rings having the lower lateral face inclined, as proposed in the document above, with either a trapezoidal or a semi-trapezoidal cross-section, are used in diesel engines to avoid sticking of the ring by the carbon deposited in the groove and present the disadvantage of having a much higher manufacturing cost than the rings with a rectangular section. A piston having a ring groove which is radially outwardly inclined towards the piston top is for example known from document US 2 522 764 A.

Object of the Invention

The object of the present invention is to provide a piston for an internal combustion engine, which allows the contact between the piston ring and the groove, during operation, especially in the moments of higher pressure on the ring, to be as distributed as possible, in order to minimize the wear rate of the lateral walls of said groove.

Summary of the Invention

This and other objects are achieved by a piston according to claim 1.

Brief Description of the Drawings

The invention will be described below, with reference to the appended drawings, in which:

Figures 1, 1a and 1b show, respectively and schematically, longitudinal vertical sectional views of prior art constructions of a piston for an internal combustion engine, mounted inside a cylinder and carrying, in a first groove, a respective piston ring, according to the prior art;
Figure 2 is a vertical lateral view of a piston for an internal combustion engine, illustrating the directions of the angular displacement of said piston in relation to a plane orthogonal to the longitudinal axis of said piston;
Figure 3 illustrates, schematically, the worn profile of the first groove of the piston, said groove being made according to the prior art illustrated in figure 1;
Figure 4 illustrates, schematically, the profile of a groove constructed in accordance with the present invention; and
Figure 4a illustrates, schematically, the worn profile of the piston groove constructed according to the present invention and illustrated in figure 4.

Detailed Description of the Invention

The present invention will be described in relation, for example, a piston designed to reciprocate inside a cylinder C of an internal combustion engine, and which is of the type illustrated in figure 2, usually made of aluminum or aluminum alloys and having a plurality of circumferential grooves 10, each groove 10 housing a respective piston ring 20. The piston ring 20 is formed of a harder material than that of the piston, for example, steel, cast iron or a sintered metallic alloy, and generally presents an annular body having an upper lateral face 21 and a lower lateral face 22, which are opposite and generally parallel to each other and orthogonal to the axial axis of the ring, an internal face 23, and an external contact face 24 to be seated against an internal face of the cylinder C.

According to the present invention, at least the first groove 10 presents a profile with an upper lateral wall 11 and a lower lateral wall 12, which are radially outwardly inclined towards the piston top, by a nominal angle of inclination such as to compensate, at least partially, the deformations to which the piston is submitted when in a critical higher load operational condition, in order to maximize the distribution of the seating contact between at least one of the upper and lower lateral faces 21, 22 of the piston ring 20 and an adjacent lateral wall 11, 12 of the groove 10, as well as to minimize the wear that determines the useful life of the groove 10, particularly on the lower lateral wall 11 of said groove 10.

According to the present invention, the maximization of the contact distribution is achieved between the lower lateral wall 12 of the groove 10 and the adjacent lower lateral face 22 of the piston ring 20, said maximization condition occurring when the lower lateral wall 12 of the groove 10 is situated substantially coplanar with a plane orthogonal to the longitudinal axis of the piston and an adjacent lower lateral face 22 of the piston ring 20 is substantially seated on said lower lateral wall 12 of the groove 10, in the operational condition that determines the useful life of the groove 10.

In the illustrated construction, the first groove 10 has the respective upper and lower lateral walls 11, 12 parallel to each other and the piston ring 20 has its upper and lower lateral faces 21, 22 parallel to each other.

While the drawings illustrate only one constructive form for the upper and lower lateral faces 21, 22, it should be understood that they may have other configurations, such as defining, for example, a trapezoidal or semi-trapezoidal profile for said piston ring 20. It should be further understood that the upper and lower lateral walls 11, 12 of each groove 10 may equally have configurations other than being parallel to each other, as illustrated. '

According to the present invention, the angle of inclination of the groove 10 is defined as a function of the mechanical and thermal characteristics of the piston and of the material with which it is formed, said thermal characteristics being determined by the coefficients of thermal transmission and thermal expansion of the piston material, and the mechanical characteristics of the piston ring being determined by the torsion and rigidity stiffness of the respective cross-section of the piston ring 20.

The achievement of the angle of inclination in accordance with the present invention also takes into account: the dynamics of the piston and piston ring 20 together, foreseeing the pressures that said piston ring 20 will exert against the lower lateral wall 12 of the groove 10 at each instant; the relative movement between each piston ring 20 and the respective groove 10; the wear rate of a portion of said lower lateral wall 12 of said groove 10; and the superficial roughness in one of the parts defined by the piston ring and the respective groove 10.

The wear between two pieces with relative movement is determined by the relation (Archard's law):

$$Q = (K.W/Hv)\Delta S$$

where: Q: volume of the material removed by wear
K: wear coefficient of the system
W: applied normal load
Hv: hardness, in Vickers, of the softer material
$\Delta S$: sliding distance

Thus, it is possible to define the wear rate at each time interval during the combustion stroke, $\Delta$WL (Wear Load), as:

$$\Delta WL = Q/\Delta S = (K.W)/Hv$$

and the wear during the engine cycle as the summing up of the $\Delta$WLs throughout the stroke. In a lubricated regime, like that of the ring/piston, part of the load W is supported by the hydrodynamic pressures of the lubricant film and these do not produce a significant wear.

The wear of the first groove 10 can be reduced by a groove/ring integrated design that minimizes the wear rate in the critical operational condition. Particularly, this design takes into account: the inclination change of the groove 10, due to the operational temperatures; the secondary movement of the piston around its pin; and the movement of the piston ring 20 in relation to the respective groove 10.

Since the piston profile when heated inclines downwardly in relation to the design position, the first groove 10, if this inclination change is not properly compensated, will have the contact of the respective piston ring 20 with the lower lateral wall 11 of the groove 10 occurring in a localized point, close to the inner bottom portion of said groove 10, starting an excessive wear process. In the initial stage, small craters appear near said inner bottom portion of the groove 10.

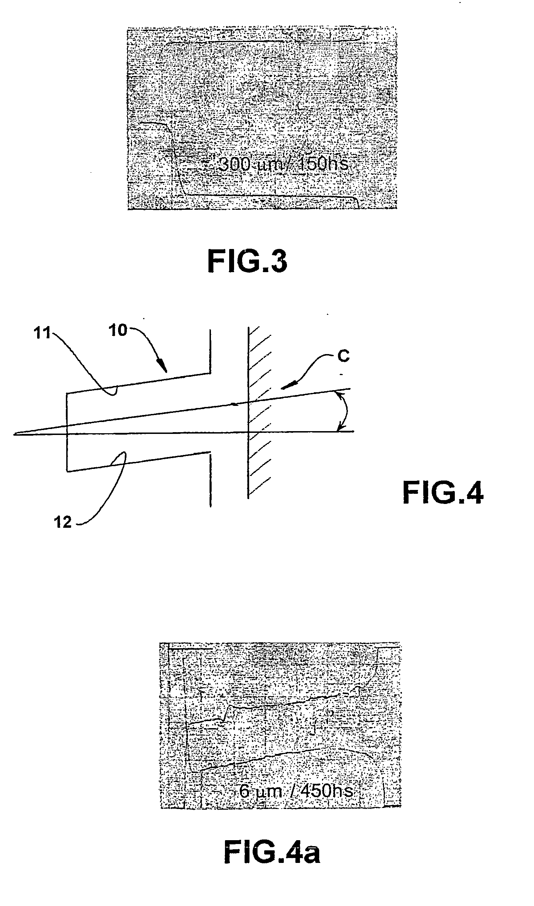

Figure 3 illustrates a prior art groove 10 in which its bottom portion has been worn by the piston operating during a time interval of 150 hours, and in which the material resulting from this wear has been removed after said time interval has elapsed. The engine operation causes wear in the groove 10 that is propagated towards the edge of the latter, producing a step that can reach about 0.30 mm (figure 3), with prejudicial consequences to the engine's performance and even breaking the piston ring 20 or the piston itself.

In accordance with the present invention and as illustrated in figures 4 and 4a, at least one groove 10 of the piston should present an angle of inclination turned upwardly, towards the piston top of about, for example, 5-30 minutes and preferably between 5 and 15 minutes, in order to compensate for the downward inclination that the groove suffers under operation. The specific value of this inclination depends on the properties of the piston material, such as thermal conductibility and coefficient of thermal expansion, on the critical or more significant operational condition regarding wear rate, and on the dynamics of the piston ring 20.

The upward inclination of the groove 10 allows that, under operation in the selected operational condition, the dynamics and the lateral contact of an end lower face 22 of the piston ring 20 with the lower lateral wall 12 of the groove 10 results in a minimum wear rate.

The present invention has been tested in 3 gasoline engines and the result is presented in Table 1, in which is shown the maximum wear value found in the lower lateral wall 11 of the first groove 10, before and after design modifications. The engine identified as I began to present excessive wear of the groove 10 in the development phase period, when its power has been increased. Engines II and III use hard anodized pistons. The wear values shown in the original design refer to the values obtained with non-anodized pistons and maintaining the original design.

TABLE I

| I- Maximum wear found in the lower flank of the 1st. groove ($\mu$m) | | | |
| --- | --- | --- | --- |
| Engine | | Original design | Optimized design |
| I | 1.0L, 48kW at 5,800 rpm | 10 $\mu$m after 150hrs | 5 $\mu$m after 150hrs |
| II | 1.6L, 70kW at 5,500 rpm | 30 $\mu$m after 150hrs | 2 $\mu$m after 150hrs |
| II I | 1.0L, 44kW at 6,000 rpm | 300 $\mu$m after 150hrs | 6 $\mu$m after 150hrs |

As it can be noted in figure 4a, the profile of the groove 10 measured in the maximum wear position shows that the optimized design not only drastically reduced the wear of the groove 10, allowing the use of conventional aluminum piston alloys, but also demonstrate that the wear mechanism has been effectively altered. In the original design, the ring/groove contact was concentrated near the inner portion of the groove 10 whereas, after optimization, the worn profile of the groove 10 has less wear and localized adjacent to the open edge of said groove 10, defining a trumpet like shape to the latter.

The present invention allows the contact of the ring with the lower flank of the groove 10 under operation, especially in the moments of higher pressure on the piston ring 20, to occur as distributed as possible, in order to minimize the wear rate in the lower flank of the groove 10.

**Claims**

**1.** A piston for an internal combustion engine of the type presenting circumferential grooves (10), each groove (10) housing a respective piston ring (20),
**characterized in that** at least one first upper groove (10) presents a profile having an upper lateral wall (11) and a lower lateral wall (12), which are radially outwardly inclined towards the piston top by an angle of inclination of about 5-30 minutes such that, under a critical higher load operational condition, the lower lateral wall (12) of the upper groove (10) is situated on a plane that is substantially orthogonal to the longitudinal axis of the piston, in order to compensate, at least partially, thermal and mechanical induced downward deformations to which the piston is submitted when in said critical operational condition, in order to increase the seating contact between the lower lateral face (22) of the piston ring (20) and the adjacent lower lateral wall (12) of the groove (10), as well as to minimize the wear that determines the useful life of the groove (10), said angle of inclination being defined as a function of the mechanical and thermal characteristics of the piston ring (20), of the piston, and of the material that forms the latter.

**2.** The piston as set forth in claim 1, **characterized in that** the angle of inclination is preferably defined from about 5 to about 15 minutes.

**3.** The piston as set forth in claim 1, **characterized in that** the first groove (10) has its upper and lower lateral walls (11, 12) parallel to each other.

**4.** The piston as set forth in claim 1, **characterized in that** the piston ring (20) has its upper and lower lateral faces (21, 22) parallel to each other.

**5.** The piston as set forth in claim 1, **characterized in that** the thermal characteristics of the piston are determined by the coefficients of thermal transmission and thermal expansion of the piston material.

**6.** The piston as set forth in claim 5, **characterized in that** the mechanical characteristics of the piston ring (20) are determined by the torsion and rigidity stiffness of the respective cross-section of the piston ring (20).

**7.** The piston as set forth in claim 6, **characterized in that** the mechanical characteristics are determined taking into account the relative movements between the piston ring (20) and the respective groove (10), and the superficial roughness in each of the parts defined by the piston ring (20) and groove (10).

**Patentansprüche**

1. Kolben für eine Verbrennungskraftmaschine der Bauart, welche umlaufende Nuten (10) aufweist, wobei jede Nut (10) einen entsprechenden Kolbenring (20) aufnimmt,

   **dadurch gekennzeichnet, daß** mindestens eine erste obere Nut (10) ein Profil mit einer oberen Seitenwand (11) und einer unteren Seitenwand (12) besitzt, welche radial nach außen in Richtung der Kolbenoberseite geneigt sind mit einem Neigungswinkel von ungefähr 5-30 Winkelminuten, so daß, unter einem Betriebszustand mit kritischer höherer Last, die untere Seitenwand (12) der oberen Nut (10) sich in einer Ebene befindet, die im wesentlichen senkrecht zu der Längsachse des Kolbens steht, um, zumindest teilweise, thermische und mechanische hervorgerufene Abwärtsverformungen auszugleichen, welchen der Kolben in dem Betriebszustand mit kritischer höherer Last unterworfen ist, um den Sitzkontakt zwischen der unteren Seitenfläche (22) des Kolbenrings (20) und der angrenzenden unteren Seitenwand (12) der Nut (10) zu verbessern, sowie um den Verschleiß zu minimieren, welcher die Standzeit der Nut (10) bestimmt, wobei der Neigungswinkel als eine Funktion der mechanischen und thermischen Eigenschaften des Kolbenrings (20), des Kolbens, und des Materials welches letzteren bildet definiert ist.

2. Kolben gemäß Anspruch 1, **dadurch gekennzeichnet, daß** der Neigungswinkel vorzugsweise von ungefähr 5 bis ungefähr 15 Winkelminuten festgelegt ist.

3. Kolben gemäß Anspruch 1, **dadurch gekennzeichnet, daß** die obere und untere Seitenwand (11, 12) der ersten Nut (10) parallel zueinander stehen.

4. Kolben gemäß Anspruch 1, **dadurch gekennzeichnet, daß** die obere und untere Seitenfläche (21, 22) des Kolbenrings (20) parallel zueinander stehen.

5. Kolben gemäß Anspruch 1, **dadurch gekennzeichnet, daß** die thermischen Eigenschaften des Kolbens mittels der Koeffizienten der Wärmeleitfähigkeit und der Wärmedehnung des Kolbenmaterials bestimmt sind.

6. Kolben gemäß Anspruch 5, **dadurch gekennzeichnet, daß** die mechanischen Eigenschaften des Kolbenrings (20) mittels der Torsionssteifigkeit und Biegesteifigkeit des entsprechenden Querschnitts des Kolbenrings (20) bestimmt sind.

7. Kolben gemäß Anspruch 6, **dadurch gekennzeichnet, daß** die mechanischen Eigenschaften unter Berücksichtigung der Relativbewegung zwischen dem Kolbenring (20) und der entsprechenden Nut (10) sowie der Oberflächenrauhigkeit jedes der durch den Kolbenring (20) und die Nut (10) definierten Teile bestimmt sind.


**Revendications**

1. Piston pour moteur à combustion interne du type à rainures circonférentielles (10), chaque rainure (10) logeant respectivement un segment de piston (20),

   **caractérisé en ce qu'**au moins une première rainure supérieure (10) présente un profil possédant une paroi latérale supérieure (11) et une paroi latérale inférieure (12), qui sont inclinées radialement vers l'extérieur en direction de la partie supérieure du piston selon un angle d'inclinaison d'environ 5 à 30 minutes de telle sorte que, dans une condition opérationnelle critique de charge plus élevée, la paroi latérale inférieure (12) de la rainure supérieure (10) est située sur un plan qui est sensiblement perpendiculaire à l'axe longitudinal du piston, afin de compenser, au moins en partie, les déformations orientées vers le bas induites de manière thermique et mécanique auxquelles le piston est soumis lorsqu'il se trouve dans ladite condition opérationnelle critique, afin d'augmenter le contact de portée entre la face latérale inférieure (22) du segment de piston (20) et la paroi latérale inférieure (12) adjacente de la rainure (10), ainsi que de réduire au minium l'usure qui détermine la vie utile de la rainure (10), ledit angle d'inclinaison étant défini en fonction des caractéristiques mécaniques et thermiques du segment de piston (20) du piston, et du matériau qui forme celui-ci.

2. Piston selon la revendication 1, **caractérisé en ce que** l'angle d'inclinaison est défini de préférence d'environ 5 minutes à environ 15 minutes.

3. Piston selon la revendication 1, **caractérisé en ce que** les parois latérales supérieure et inférieure (11, 12) de la première rainure (10) sont parallèles l'une à l'autre.

4. Piston selon la revendication 1, **caractérisé en ce que** les faces latérales supérieure et inférieure (21, 22) du segment de piston (20) sont parallèles l'une à l'autre.

5. Piston selon la revendication 1, **caractérisé en ce que** les caractéristiques thermiques du piston sont déterminées par les coefficients de transmission thermique et de dilatation thermique du matériau de piston.

6. Piston selon la revendication 5, **caractérisé en ce que** les caractéristiques mécaniques du segment de piston (20) sont déterminées par la torsion et la rigidité de la section transversale respective du segment de piston (20).

7. Piston selon la revendication 6, **caractérisé en ce que** les caractéristiques mécaniques sont déterminées en prenant en compte les mouvements relatifs entre le segment de piston (20) et la rainure (10) respective, et la rugosité superficielle dans chacune des parties définie par le segment de piston (20) et la rainure (10).

FIG. 1

FIG. 1a

FIG. 1b

FIG. 2

**FIG.3**

**FIG.4**

**FIG.4a**